(19) Europäisches Patentamt
European Patent Office
Office européen des brevets

(11) **EP 4 770 033 A1**

(12) **EUROPEAN PATENT APPLICATION**
published in accordance with Art. 153(4) EPC

(43) Date of publication:
**01.07.2026 Bulletin 2026/27**

(21) Application number: **24855625.0**

(22) Date of filing: **09.08.2024**

(51) International Patent Classification (IPC):
**H04L 41/14** (2022.01)

(86) International application number:
**PCT/CN2024/111074**

(87) International publication number:
**WO 2025/039899 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.08.2023 CN 202311062350**

(71) Applicants:
• **CHINA MOBILE COMMUNICATION CO., LTD RESEARCH INSTITUTE**
  **Beijing 100053 (CN)**

• **CHINA MOBILE COMMUNICATIONS GROUP CO., LTD.**
  **Beijing 100032 (CN)**

(72) Inventors:
• **LI, Aihua**
  **Beijing 100053 (CN)**
• **JIANG, Yu**
  **Beijing 100053 (CN)**

(74) Representative: **Herrero & Asociados, S.L.**
**Edificio Aqua - Calle Agustín de Foxá, 4-10, 2ºA**
**28036 Madrid (ES)**

(54) **MODEL TRAINING METHOD AND APPARATUS, AND NETWORK FUNCTION AND STORAGE MEDIUM**

(57) Disclosed in the embodiments of the present disclosure are a model training method and apparatus, and a network function and a storage medium. The method comprises: a first network analysis function receiving first model information sent by a second network analysis function; on the basis of the first model information, performing calculation, aggregation or processing, so as to obtain second model information; and sending the second model information to the second network analysis function, wherein the second model information is used for the second network analysis function to update a local model, and the second network analysis function is provided in at least one of a user equipment (UE), a radio access network (RAN), a network function (NF), and an application function (AF).

```
┌─────────────────────────────────────────────────────────────────────┐
│ A first network analysis function may receive first model information │ 101
│ that is transmitted from at least one second network analysis function│
└─────────────────────────────────────────────────────────────────────┘
                                  ↓
┌─────────────────────────────────────────────────────────────────────┐
│ Computation, aggregations, or processing may be performed based on    │ 102
│ the first model information to obtain second model information         │
└─────────────────────────────────────────────────────────────────────┘
                                  ↓
┌─────────────────────────────────────────────────────────────────────┐
│ The second model information may be transmitted to the second network │ 103
│ analysis function, and the second model information may be used by the │
│ second network analysis function to update a local model              │
└─────────────────────────────────────────────────────────────────────┘
```

FIG. 1

**Description**

**CROSS REFERENCE TO RELATED APPLICATIONS**

The present application is based on and claims the priority of the Chinese patent application No. 202311062350.6, filed on August 22, 2023, contents of which are incorporated herein by its entireties.

**TECHNICAL FIELD**

The present disclosure relates to the field of communication, in particular to a model training method, a model training method apparatus, a network function, and a storage medium.

**BACKGROUND**

In an intelligent network architecture in the art, a network analytics function (NWDAF) may substantially involve data collection, module training, and inference feedback. However, in practice, cross-domain functionality at only a network side may be achieved, joint data sharing and utilization across a client side, a network side, a wireless side, and an application side may not be achieved.

**SUMMARY**

The present disclosure provides a model training method, a model training method apparatus, a network function, and a storage medium.

Technical solutions of the present application are achieved as follows.

In a first aspect, the present disclosure provides a model training method, including the following.

A first network analytics function receives first model information transmitted from a second network analytics function.

Computation, aggregation, or processing are performed based on the first model information to obtain second model information.

The second model information is transmitted to each of the at least one second network analytics function. The second model information is used by each of the at least one second network analytics function to update a respective local model.

The at least one second network analytics function is respectively configured in at least one of: a user equipment (UE), a radio access network (RAN), a network function (NF), or an application function (AF).

In some embodiments, the first model information includes intermediate information, which is obtained by the second network analytics function performing computation or processing based on the local model.

In some embodiments, the second model information includes sub-model information, corresponding to the second network function, of the first model.

In some embodiments, before the first network analytics function receiving the first model information transmitted from the second network analytics function, the method further includes the following.

The first network analytics function transmits first information to the second network analytics function, wherein the first information is used to request model training.

In some embodiments, before the first network analytics function transmitting the first information to the second network analytics function, the method further includes the following.

The first network analytics function receives second information transmitted by a consumer, and the second information is configured to request or subscribe to a model or model information.

In some embodiments, the method further includes: the first network analytics function performing computation, aggregation, or processing based on the first model information to obtain a performance metric of a first model.

The first network analytics function transmits third information to a consumer. The third information includes the performance metric of the first model; and the third information is used by the consumer to make decision on whether to continue training or terminate training.

In some embodiments, the method further includes: the first network analytics function receiving fourth information transmitted by the consumer, wherein the fourth information is configured to indicate whether to continue training or terminate training.

In some embodiments, the performance metric of the first model includes at least one of:

A loss function, an accuracy rate, an accuracy level, a recall rate, and a precision rate.

In some embodiments, before the first network analytics function transmitting the first information to the second network analytics function, the method further includes the following.

The first network analytics function performs, based on second information, query to a network repository function to obtain an address of the second network analytics function.

In some embodiments, the first model information transmitted from one second network analytics function further comprises label data.

In some embodiments, the second network analytics function has one sub-model of the first model; and/or All sub-models of all second network analytics functions collectively form the first model.

In a second aspect, the present disclosure provides a model training method, including the following.

A second network analytics function performs computation or processing based on a local model to obtain first model information and transmits the first model information to a first network analytics function.

Second model information transmitted by the first network analytics function is received, and the local model is updated based on the second model information.

The second network analytics function is configured in a user equipment (UE), a radio access network (RAN), a network function (NF), or an application function (AF).

In some embodiments, the first model information includes intermediate information, which is obtained by the second network analytics function performing computation or processing based on the local model.

In some embodiments, the second model information comprises sub-model information, corresponding to the second network function, of the first model.

In some embodiments, before the second network analytics function performing computation or processing based on the local model, the method further includes the following.

The second network analytics function collects data from at least one of: a terminal, the radio access network, the network function, and the application function.

Data alignment is performed for all second network analytics functions to determine first data, which belongs to a same user and exists in each second network analytics function.

In some embodiments, the second network analytics function performing computation or processing based on second local model to obtain first model information, includes the following.

The second network analytics function performs computation or processing based on the first data and the local model to obtain the first model information.

In some embodiments, the first model information further includes label data.

In some embodiments, before the second network analytics function performing computation or processing based on the local model, the method further includes: the second network analytics function receiving first information transmitted by the first network analytics function. The first information is configured to request model training.

In some embodiments, the method further includes: the second network analytics function transmitting fifth information to a network repository function. The fifth information is used for registration; the fifth information includes at least one of the following information of the second network analytics function: an address, a service area, a federated learning capability type.

In some embodiments, the second network analytics function is embedded within the UE, the RAN, the NF, or the AF; or is deployed independently from the UE, the RAN, the NF, or the AF.

In a third aspect, the present disclosure provides a model training apparatus, configured in a first network analytics function. The model training apparatus includes a first communication unit and a first processing unit.

The first communication unit is configured to receive first model information transmitted by the second network analytics function.

The first processing unit is configured to perform computation, aggregation, or processing based on the first model information to obtain second model information.

The first communication unit is further configured to transmit the second model information to the second network analytics function. The second model information is used by the second network analytics function to update a local model.

The second network analytics function is respectively configured in at least one of: a user equipment (UE), a radio access network (RAN), a network function (NF), and an application function (AF).

In a fourth aspect, the present disclosure provides a model training apparatus, configured in a second network analytics function. The second network analytics function is configured in a user equipment (UE), a radio access network (RAN), a network function (NF), or an application function (AF). The model training apparatus includes a second processing unit and a second communication unit.

The second processing unit is configured to perform computation or processing based on a local model to obtain first model information.

The second communication unit is configured to: transmit the first model information to a first network analytics function; and receive second model information transmitted from the first network analytics function.

The second processing unit is further configured to update the local model based on the second model information.

In a fifth aspect, the present disclosure provides a computer-readable storage medium, storing a computer program. When the computer program is executed by a processor, operations of the model training method in the first aspect or in the second aspect are performed.

In a sixth aspect, the present disclosure provides a network function including a memory, a processor, and a computer program stored on the memory and executable on the processor. The processor, when executing the computer program, is configured to perform operations of the model training method in the first aspect or in the second aspect.

According to the present disclosure, a model training method, an apparatus, a network function, and a storage medium are provided. The model training method may include: a second network analytics function performing computation or processing based on a local model, so as to obtain first model information, transmitting the first model information to a first network analytics function; the first network analytics function performing computation, aggregation, or processing based on the first model information to obtain second model information and transmitting the second model information to the second network analytics function; and the second network analytics function updating the local model based on the second model information. The second network analytics function is respectively configured in at least one of UE, RAN, NF, and AF. According to the present disclosure, the second network analytics function may be configured in at least one of the UE, RAN, NF, or AF, i.e., the second network analytics function may be configured in any domain, train a local sub-model based on data collected from each domain, transmit the model information (denoted as the first model information), which is obtained by performing local computation, to the first network analytics function for computation, processing, and so on. In this way, joint data sharing and utilization across the client side, the network side, the wireless side, and the application side may be achieved, and cross-domain functionality at the network side may be achieved.

## BRIEF DESCRIPTION OF THE DRAWINGS

FIG. 1 is a flow chart I of a model training method according to an embodiment of the present disclosure.
FIG. 2 is a diagram of a systemic architecture applied for the model training method according to an embodiment of the present disclosure.
FIG. 3 is a flow chart II of the model training method according to an embodiment of the present disclosure.
FIG. 4 is a structural schematic diagram I of a model training apparatus according to an embodiment of the present disclosure.
FIG. 5 is a structural schematic diagram II of the model training apparatus according to an embodiment of the present disclosure.
FIG. 6 is a structural schematic diagram of hardware of a network function according to an embodiment of the present disclosure.

## DETAILED DESCRIPTION

The present disclosure will be described in further detail by referring to the accompanying drawings and specific embodiments.

Technical solutions of the embodiments of the present disclosure may be applied to various communication systems, such as: a global system for mobile communications (GSM) system, a long-term evolution (LTE) system, or a 5G system, and so on. In some embodiments, the 5G system or a 5G network may also be referred to as a new radio (NR) system or a NR network.

For example, the communication system in the embodiments of the present disclosure may include a network device and a terminal device (also referred to as a terminal, a communication terminal, and so on). The network device may be a terminal communicating with the terminal device. The network device may provide communication coverage for a certain area and communicate with any terminal located within the certain area. In some embodiments, the network device may be a base station in various communication systems, such as an evolutional Node B (eNB) in the LTE system, or a base station (gNB) in the 5G or NR system.

It should be understood that a device with a communication capability within the network/system of the present disclosure may be referred to as a communication device. The communication device may include a network device and a terminal having the communication capability. The network device and the terminal device may be the device described above and will not be repeated herein. The communication device may further include other devices within a communication system, such as a network controller, a mobile management entity, and other network entities, which will not be limited herein.

It should be understood that the terms "system" and "network" may often used interchangeably herein. The term "and/or" herein merely describes an associative relationship between objects, indicating three possible relationships. For example, "A and/or B" may represent: the A is present alone, both the A and the B are present, or the B is present alone. In addition, the character "j" generally denotes an object before the character "or" an object after the character.

The terms "first," "second," and so on, in the description and claims of the present disclosure are used to distinguish similar objects and do not necessarily describe a specific sequence or order thereof. It should be understood that data described by the terms may be interchanged as appropriate, such that the embodiments of the present disclosure described herein may be implemented in an order other than those illustrated or described herein. Furthermore, the terms "include", "have," and any variations thereof, are intended to cover non-exclusive inclusions. For example, a process, a method, a system, a product, or a device including a series of steps or units is not limited to the steps or units explicitly listed, but may include other steps or units that are not explicitly listed or are inherently included in the process, the method, the system, the product, or the device.

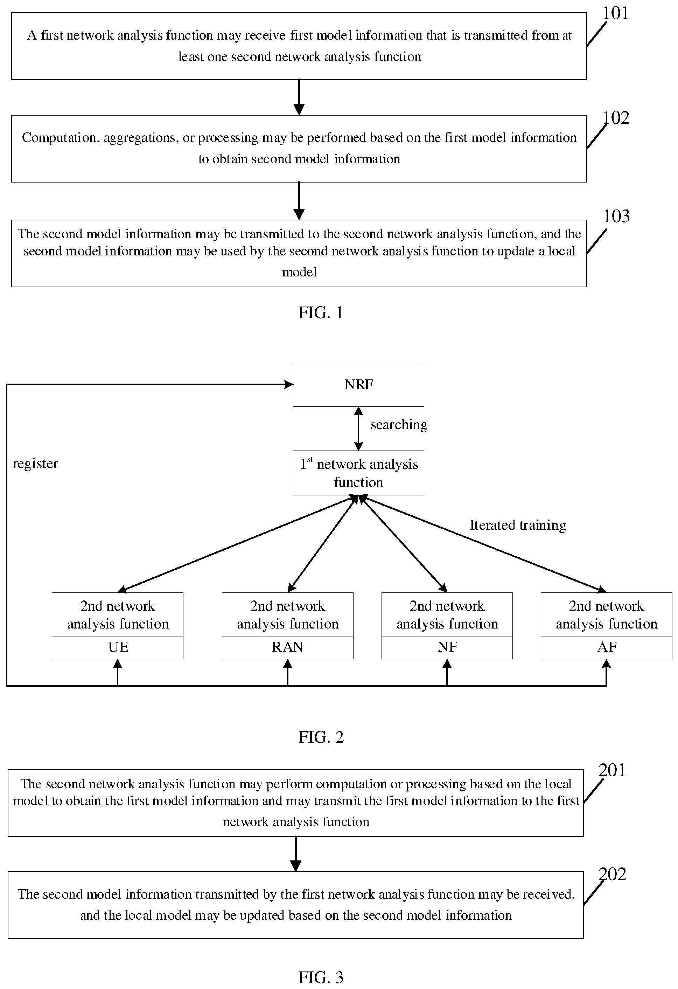

The present disclosure provides a model training method applied to a first network analytics function. FIG. 1 is a flow chart I of the model training method according to an embodiment of the present disclosure. As shown in FIG. 1, the method may include the following.

In a block 101, a first network analytics function may receive first model information that is transmitted from at least one second network analytics function.

In a block 102, computation, aggregations, or processing may be performed based on the first model information to obtain second model information.

In a block 103, the second model information may be transmitted to the second network analytics function, and the second model information may be used by the second network analytics function to update a local model.

The second network analytics function may be respectively configured in at least one of a UE, a RAN, a NF, and an AF.

The present disclosure is related to federated learning or a federated model training process, particularly related to vertical federated learning or a vertical federated model training process. During federated learning or federated model training, the network may include two types of network analytics functions: the first network analytics function being a first type of the two types, and the second network analytics function being a second type of the two types. The first network analytics function may also be referred to as a server-side network analytics function, and the second network analytics function may also be referred to as a client-side network analytics function.

In some embodiments, the local model may be a sub-model of a first model. In the embodiments of the present disclosure, the model within each second network analytics function may be referred to as either the local model or the sub-model, and the two terms may be interchangeable.

In some embodiments, when the embodiments of the present disclosure are applied to a scenario involving the vertical federated learning or the vertical federated model training, the second network analytics function may include one sub-model of the first model; and/or, all sub-models of all second network analytics functions may collectively form the first model.

In the present embodiment, the first network analytics function may distribute at least one sub-model of a federated model to at least one second network analytics function, respectively.

Each of the at least one second network analytics function may train, based on collected local data, a respective one of the at least one sub-model and transmit intermediate information, which is obtained based on training, (such as a computation result based on parameters of the sub-model) to the first network analytics function. The first network analytics function may perform computation, aggregation, and processing on the intermediate information transmitted by each second network analytics function to obtain new information or model parameters. The first network analytics function may update information or parameters of the federated model of the first network analytics function with the new information or model parameters, such that the federated model may be updated. During processing or training, data in different domains cannot be exchanged, and the local data may not be transmitted to the first network analytics function. Therefore, data privacy and security may be ensured. The federated model may also be referred to as the first model or a global model. The sub-model of the federated model may also be referred to as the sub-model of the first model or the local model. All sub-models of all second network analytics functions may collectively form or aggregated to form the first model.

For example, the aforementioned network analytics functions may be the network analytics functions (NWDAF) in the 5G network. The first network analytics function may be a server NWDAF, and the second network analytics function may be a client NWDAF. In other communication networks or future communication networks, the aforementioned network analytics functions may be other network elements, as long as corresponding functions can be achieved. The present disclosure does not limit terms of the first network analytics function and the second network analytics function.

In the present embodiment, the second network analytics functions may be respectively configured in at least one of the UE, the RAN, the NF, and the AF. The term "configured" may also be refer to being deployed, co-located, deployed as a sub-system, and so on. That is, the second network analytics functions in the embodiment may be configured across various domains. Each second network analytics function may train, based on data collected from each domain, the respective local sub-model. Each second network analytics function may transmit the model information (denoted as first model information), which is obtained based on local computation, to the first network analytics function to be computed, processed, processed, and so on. In this way, joint data sharing and utilization across the client side, the network side, the wireless side, and the application side may be achieved, and cross-domain functionality at the network side may be achieved. In some embodiments, the second network analytics function may be configured within the NF, and the NF may include the NWDAF.

In some embodiments, the second network analytics functions may be respectively embedded within the UE, the RAN, the NF, or the AF, for example, each second network analytics function may respectively be a sub-system of the UE, a sub-system of the RAN, a sub-system of the NF, or a sub-system of the AF. Alternatively, the second network analytics function may be deployed independently from the UE, the RAN, the NF, or the AF.

In some embodiments of the present disclosure, the first model information may include the intermediate information, which may be obtained by the second network analytics function performing computation or processing based on the local model. In some embodiments, the intermediate information may include at least an intermediate result, which may be obtained by the second network analytics function performing computation or processing based on the local model.

For example, the aforementioned intermediate result may be expressed as:

$$H_k = G_k\left(x_k, \theta_k\right) \qquad (1)$$

The $x_k$ may denote local data used for training the sub-model. The $\theta_k$ may denote the model parameters of the sub-model. The $H_k$ may denote the intermediate result.

In some embodiments, the first model information transmitted by one second network analytics function may further include label data.

In the present embodiment, the first network analytics function may request the at least one second network analytics function to perform model training. In this way, the first network function may receive first model information transmitted by the at least one second network analytics function. The first model information transmitted by one of the at least one second network analytics function may further include the label data. The label data may be used by the first network analytics function, during performing computation, aggregation, or processing based on the first model information, to compute a performance metric (such as a loss function) of the first model.

In the present embodiment, the first network analytics function may perform computation, aggregation, or processing based on the first model information to obtain the second model information. In some embodiments, the second model information may include model information of the local model corresponding to the second network function, or the second model information may include sub-model information, corresponding to the second network function, of the first model. For example, the sub-model information may be a sub-model gradient. The first network analytics function may distribute the sub-model gradient corresponding to each second network function to the respective second network function. In this way, each second network function may update the respective local model based on the corresponding sub-model gradient (or the second model information). In some embodiments, the second model information may further include the loss function of the first model.

In some embodiments, before the first network analytics function receiving the first model information transmitted by the second network analytics function, the method may further include: the first network analytics function transmitting first information to the second network analytics function. The first information may be configured to request training of the model.

In the present embodiment, the first information, which is transmitted by the first network analytics function to the second network analytics function, may be configured to request training of the model, i.e., triggering each second network analytics function to train the respective local model.

In some embodiments, the first information may at least include model-related information. Specifically, the model-related information may be: model description information, and other content. The model information may be carried in the first information, during the first network analytics function distributing information to the second network analytics function for the first time. Exemplarily, the model information may include at least one of: a model architecture, model parameters, model hyperparameters, and a model input format. The model information may be used by the second network analytics function to perform initialization on the to-be-trained sub-model.

In some embodiments, before the first network analytics function transmitting the first information to the second network analytics function, the method may further include: the first network analytics function receiving second information transmitted by a consumer. The second information may be used to request or subscribe to the model or the model information.

In the present embodiment, the second information transmitted by the consumer to the first network analytics function may be used for a subscription request or to request model subscription. In addition, the second information may further include requirements or expectations, or other related information, of the consumer for the model. For example, the second information may include a model performance type, a model performance metric, model performance information, model training status information, model status information, or model metric(s), and so on. The above terms may have a same meaning, perform a same function, or contain a same content. In other embodiments, the above terms may be arbitrarily exchanged with each other, which will not be limited herein.

In the embodiments of the present disclosure, the consumer may refer to a requester of the model; or may refer to a node, a device, or a network element to which the requester of the model belongs.

In some embodiments of the present disclosure, the method may further include: the first network analytics function performing computation, aggregation, or processing based on the first model information to obtain performance metrics of the first model; the first network analytics function transmitting third information to the consumer. The third information may include a performance metric of the first model; and the third information may be used by the consumer to make decision on whether to continue or terminate the training.

In the present embodiment, during the first network analytics function performing computation, aggregation, or processing based on the first model information, the second model information may be obtained, such as a value of the sub-model gradient; and the performance metric for the first model may be obtained. In some embodiments, the performance metric of the first model may include at least one of the following: the loss function, an accuracy rate, an accuracy level, a precision rate, a recall rate. The accuracy rate may also be referred to as a correct rate or accuracy. The precision rate may also be referred to as precision. The recall rate may also be referred to as recall. The accuracy level may also be referred to as a correct rate level or the accuracy level.

As an example, the loss function may be determined based on the following:

$$f\left(\Theta; \mathrm{x}_i; y_i\right) = L(G_1(\mathrm{x}_{i,1}, \theta_1), ..., G_K(\mathrm{x}_{i,K}, \theta_K)), y_{i,K}) \qquad (2)$$

The $f(\Theta; \mathrm{x}_i; y_i)$ may denote the loss function. The $G_1(\mathrm{x}_{i,1}, \theta_1), ..., G_K(\mathrm{x}_{i,K}, \theta_K)$ may denote the first model information (or the intermediate results) reported by K second network analytics functions. The $y_{i,K}$ may denote the label data.

In some embodiments of the present disclosure, the method may further include: the first network analytics function receiving fourth information transmitted by the consumer. The fourth information may be configured to indicate whether to continue training or terminate training.

In the present embodiment, the consumer may make decision based on the third information (or the performance metric of the first model) reported by the first network analytics function to determine whether to continue training or update a training status.

In some embodiments, the third information may further include at least one of the following: a cumulative iteration count, a cumulative iteration time length, a cumulative computation load. The first network analytics function may perform computation, aggregation, or processing based on data, such as an iteration count, an iteration time length, and a computation resource metric, carried in the first model information reported by each second network analytics function, so as to obtain information including the cumulative iteration count, the cumulative iteration time length, and the cumulative computation load.

Accordingly, the consumer may make decision based on the performance metric of the first model. When the performance metric meets a predetermined condition, the consumer may decide to continue training or terminate training. In some embodiments, the consumer may decide to continue training or terminate training based on the information such as the cumulative iteration count, the cumulative iteration time length, and the cumulative computation load carried in the third information.

In some embodiments of the present disclosure, before the first network analytics function transmitting the first information to the second network analytics function, the method may further include: the first network analytics function performing, based on the second information, a query to a network repository function, so as to obtain an address of the second network analytics function.

In the present embodiment, before each network analytics function performs respective functions, each network analytics function may register with the network repository function. In some embodiments, the network repository function may be a network repository function (NRF) in the 5G network. In other communication systems or the future systems, the network analytics function may be other network function, and a term thereof may not be limited herein. That is, the network analytics function may store relevant information about each registered network function, such as service scope information. The first network analytics function may perform the query to the network analytics function to determine relevant information (such as the address) for each second network analytics function the performs a current network training task. Specifically, the first network analytics function may perform the query to the network analytics function based on information related to the model training (such as the second information) carried within the second information of the consumer, so as to determine at least one second network analytics function that satisfies requirements for performing the current training task (such as the model type, the service scope).

FIG. 2 is a diagram of a systemic architecture applied for the model training method according to an embodiment of the present disclosure. As shown in FIG. 2, the second network analytics functions (such as the client NWDAF) in the present embodiment may be respectively configured across various domains such as the UE, the RAN, the NF, or the AF. For example, the second network analytics functions may be respectively embedded within the UE, the RAN, the NF, or the AF, or deployed independently from the UE, the RAN, the NF, or the AF.

Before performing the model training, each second network analytics function may firstly register information with the NRF. The registered information may include at least one of the following: an address, a service area, and a federated learning capability type. In this way, the first network analytics function may perform the query for or discover the second network analytics function.

After receiving the model subscription request from the consumer, the first network analytics function may perform the query in the NRF based on the model-related information or requirement information carried within the model subscription request, so as to obtain the addresses of each second network analytics function that is capable of performing the current model training task. Subsequently, the first network analytics function may transmit an analysis request (equivalent to the second information in the above embodiment) to each second network analytics function based on the address of each second network analytics function. The second network analytics function may perform training on the local model and may transmit the first model information to the first network analytics function. The first network analytics function may perform computation, aggregation, or processing based on the first model information. In this way, on the one hand, the second model information may be obtained; and on the other hand, the performance metric of the first model may be obtained. The performance metric of the first model (equivalent to the third information in the above embodiment) may be transmitted to the consumer, and the consumer may decide whether to continue or terminate training. When the consumer decides to continue training, the first network analytics function may be instructed to resume training. The first network analytics function may transmit the second model information to each second network analytics function, enabling each second network analytics function to update the respective local model and train the respective local model again. In this way, iterative training may be achieved, until a training termination condition is triggered.

The present disclosure further provides a model training method performed by the second network analytics function. FIG. 3 is a flow chart II of the model training method according to an embodiment of the present disclosure. As shown in FIG. 3, the method may include the following.

In an operation 201, the second network analytics function may perform computation or processing based on the local model to obtain the first model information and may transmit the first model information to the first network analytics function.

In an operation 202, the second model information transmitted by the first network analytics function may be received, and the local model may be updated based on the second model information.

The second network analytics functions may be respectively configured in the UE, the RAN, the NF, or the AF.

The embodiments of the present disclosure relate to the federated learning or the federated model training process, particularly to the vertical federated learning or the vertical federated model training process. During the federated learning or the federated model training process, the network may include two types of network analytics functions: the first network analytics function being a first one of the two types of network analytics functions, and the second network analytics function being a second one of the two types of network analytics functions. The first network analytics function may also be referred to as the server-side network analytics function, and the second network analytics function may also be referred to as the client-side network analytics function.

In some embodiments, the local model may be the sub-model of the first model. In the embodiments of the present disclosure, the model of each second network analytics function may be referred to as either the local model or the sub-model, and the two terms may be interchangeable.

In some embodiments, when the embodiments of the present disclosure are applied to the scenario involving the vertical federated learning or the vertical federated model training, the second network analytics function may include one sub-model of the first model; and/or, all sub-models of all second network analytics functions may collectively form the first model.

In the present embodiment, the first network analytics function may distribute at least one sub-model of the federated model to the at least one second network analytics function, respectively. Each of the at least one second network analytics function may train, based on collected local data, the respective one of the at least one sub-model and transmit the intermediate information, which is obtained based on training, (such as the computation result based on parameters of the sub-model) to the first network analytics function. The first network analytics function may perform computation, aggregation, and processing on the intermediate information transmitted by each second network analytics function to obtain new information or model parameters. The first network analytics function may update information or parameters of the federated model of the first network analytics function with the new information or model parameters, such that the federated model may be updated. During processing or training, data in different domains cannot be exchanged, and the local data may not be transmitted to the first network analytics function. Therefore, data privacy and security may be ensured. The federated model may also be referred to as the first model or the global model. The sub-model of the federated model may also be referred to as the sub-model of the first model or the local model. All sub-models of all second network analytics functions may collectively form or aggregated to form the first model.

For example, the aforementioned network analytics functions may be the network analytics functions (NWDAF) in the 5G network. The first network analytics function may be the server NWDAF, and the second network analytics function may be the client NWDAF. In other communication networks or future communication networks, the aforementioned network analytics functions may be other network elements, as long as corresponding functions can be achieved. The present disclosure does not limit terms of the first network analytics function and the second network analytics function.

In the present embodiment, the second network analytics functions may be respectively configured in at least one of the UE, the RAN, the NF, and the AF. All second network analytics functions performing the current model training task may be respectively configured in at least one of the UE, the RAN, the NF, or the AF. The term "configured" may also be refer to being deployed, co-located, deployed as a sub-system, and so on. That is, the second network analytics functions in the embodiment may be configured across various domains. Each second network analytics function may train, based on data collected from each domain, the respective local sub-model. Each second network analytics function may transmit the model information (denoted as the first model information), which is obtained based on local computation, to the first network analytics function to be computed, processed, processed, and so on. In this way, joint data sharing and utilization across the client side, the network side, the wireless side, and the application side may be achieved, and cross-domain functionality at the network side may be achieved. In some embodiments, the second network analytics function may be configured within the NF, and the NF may include the NWDAF.

In some embodiments, the second network analytics functions may be respectively embedded within the UE, the RAN, the NF, or the AF, for example, each second network analytics function may be the sub-system of the UE, the sub-system of the RAN, the sub-system of the NF, or the sub-system of the AF. Alternatively, the second network analytics function may be deployed independently from the UE, the RAN, the NF, or the AF.

In some embodiments of the present disclosure, the first model information may include the intermediate information, which may be obtained by the second network analytics function performing computation or processing based on the local model. In some embodiments, the intermediate information may include at least the intermediate result, which may be obtained by the second network analytics function performing computation or processing based on the local model. For example, the intermediate result may be determined based on the formula (1) in the above.

In the present embodiment, the second network analytics function may perform computation to obtain the first model information (such as the intermediate result) based on at least some features of locally collected data and at least some parameters of the local model.

In some embodiments, the first model information may further include the label data.

The first network analytics function may request the at least one second network analytics function to perform model training. In this way, the first network function to receive first model information transmitted by each of the at least one second network analytics function. The first model information transmitted by one of the at least one second network analytics function may further include the label data. The label data may be used by the first network analytics function to perform, during performing computation, aggregation, or processing based on the first model information, computation on the performance metric (such as the loss function) of the first model.

In some embodiments, the second model information may include the model information of the local model of the corresponding second network function. Alternatively, the second model information may include the sub-model information, corresponding to the second network function, of the first model. For example, the sub-model information may be the sub-model gradient. The first network analytics function may distribute the sub-model gradient corresponding to each second network function to the respective second network function, enabling the respective second network function to update the local model based on the sub-model gradient (or the second model information). In some embodiments, the second model information may further include the loss function of the first model.

In some embodiments, a process of updating the local model may be expressed as follows:

$$\nabla_{\theta_k} l = \frac{\partial l}{\partial \theta_k} = \sum_i \frac{\partial l}{\partial H_{i,k}} \frac{\partial H_{i,k}}{\partial \theta_k} \qquad (3)$$

$$\theta_k^{j+1} = \theta_k^j - \eta \, \nabla_{\theta_k} l \qquad (4)$$

The $\nabla_{\theta_k} l$ may denote a gradient of local parameters. The $\theta_k^j$ may denote model parameters of a previous iteration. The $\theta_k^{j+1}$ may denote post-updating model parameters. The $\eta$ may denote a learning rate. The $\dfrac{\partial l}{\partial H_{i,k}}$ may denote the sub-model gradient. The $\dfrac{\partial H_{i,k}}{\partial \theta_k}$ may denote an intermediate gradient. The intermediate gradient may be obtained by the second network analytics function performing computation.

In some embodiments, before the second network analytics function performing computation or processing based on the local model, the method may further include: the second network analytics function receiving the first information transmitted from the first network analytics function. The first information may be configured to request training of the model.

In the present embodiment, the first information transmitted by the first network analytics function to the second network analytics function may be configured to request training of the model, and that is, each second network analytics function may be triggered to train the local model.

In some embodiments, the first information may at least include model-related information. Specifically, the model-related information may be: model description information, and other content. The model information may be carried in the first information, during the first network analytics function distributing information to the second network analytics function for the first time. Exemplarily, the model information may include at least one of: the model architecture, model parameters, model hyperparameters, and the model input format. The model information may be used by the second network analytics function to perform initialization on the to-be-trained sub-model.

In some embodiments, before the second network analytics function performing computation or processing based on the local model, the method may further include: the second network analytics function collecting data from at least one of: the terminal, the radio access network, the network function, and the application function; performing, based on the collected data, data alignment for all second network analytics functions so as to determine first data, which belongs to one same user and exists in each second network analytics function.

In the present embodiment, each second network analytics function configured in each of various domains may collect local data to form a local dataset. For example, the UE may directly collect data via DCAF or other means. RAN data may be directly collected via operation administration and maintenance (OAM) or other manners. Data of the network function may be obtained through existing functionalities. Data of the application function may be directly collected via the AF. A method for data collection will not be limited herein.

In the present embodiment, all second network analytics functions configured in all various domains may perform data alignment on the collected data, and that is, training samples may be aligned to each other, so as to determine the first data, which belongs to the same user and exists in all second network analytics functions. For example, the second network analytics functions may perform data alignment based on algorithms, such as privacy-preserving intersection, so as to determine the first data, which belongs to the same user and exists in all second network analytics functions.

In some embodiments, the operation of each second network analytics function performing computation or processing based on the local model to obtain the first model information, may include: the second network analytics function performing computation or processing based on the first data and the local model to obtain the first model information.

In the present embodiment, based on the data alignment, the first data, which belongs to the same user and exists in all second network analytics functions, may be determined. Each second network analytics function may train the respective local model based on the first data to obtain the first model information.

In some embodiments, the method may further include: the second network analytics function transmitting fifth information to the network repository function. The fifth information may be configured for registration. The fifth information may include at least one of the following information of the second network analytics function: an address, a service area, a federated learning capability type.

In the present embodiment, before each network analytics function performing the respective function, each network analytics function may register with the network repository function. In some embodiments, the network repository function may be the network repository function (NRF) in the 5G network. In other communication systems or future systems, the network analytics function may be other network functions, and a terminology thereof may not be limited herein. That is, the network analytics function may store relevant information about each registered network function, such as including at least one of: the address, the service area, and the federated learning capability type. In this way, the first network analytics function, before performing the model training task, may perform the query to the network repository function, so as to determine the relevant information (such as the address) of each second network analytics function that is capable of performing the current network training task.

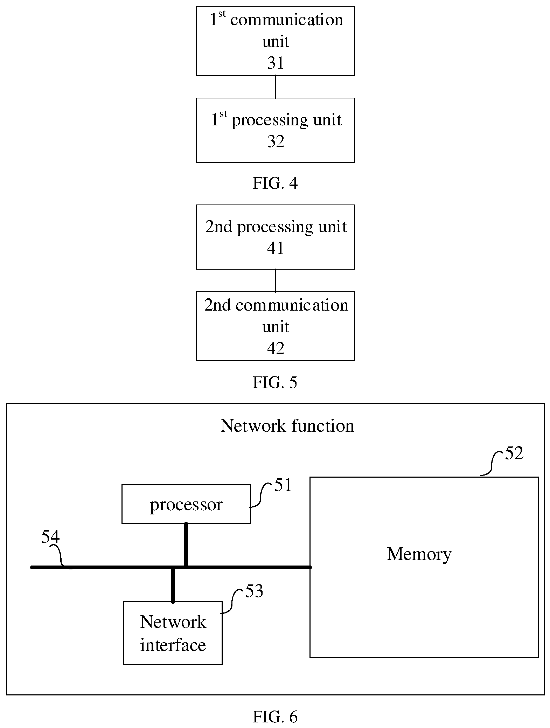

Based on the above embodiments, the present disclosure provides a model training apparatus, configured with the first network analytics function. FIG. 4 is a structural schematic diagram I of the model training apparatus according to an embodiment of the present disclosure. As shown in FIG. 4, the apparatus may include a first communication unit 31 and a first processing unit 32.

The first communication unit 31 may be configured to receive first model information transmitted by the second network analytics function.

The first processing unit 32 may be configured to perform computation, aggregation, or processing based on the first model information to obtain the second model information.

The first communication unit 31 may further be configured to transmit the second model information to the second network analytics function, and the second model information may be used by the second network analytics function to update the local model.

The second network analytics functions may be respectively configured in at least one of the UE, the RAN, the NF, and the AF.

In some embodiments of the present disclosure, the first model information may include the intermediate information, which may be obtained by the second network analytics function performing computation or processing based on the local model.

In some embodiments of the present disclosure, the second model information may include the sub-model information, corresponding to the second network function, of the first model.

In some embodiments of the present disclosure, the first communication unit 31, before receiving the first model information transmitted from the second network analytics function, may further be configured to transmit the first information to the second network analytics function. The first information may be configured to request training of the model.

In some embodiments of the present disclosure, the first communication unit 31, before transmitting the first information to the second network analytics function, may further be configured to receive the second information transmitted by the consumer. The second information may be configured to request or subscribe to a model or the model information.

In some embodiments of the present disclosure, the first processing unit 32 may further be configured to perform computation, aggregation, or processing based on the first model information, so as to obtain the performance metric of the first model.

The first communication unit 31 may further be configured to transmit the third information to the consumer. The third information may include the performance metric of the first model. The third information may be used by the consumer to make decision on whether to continue training or terminate training.

In some embodiments of the present disclosure, the first communication unit 31 may further be configured to receive the fourth information transmitted by the consumer. The fourth information may be configured to indicate whether to continue training or terminate training.

In some embodiments of the present disclosure, the performance metric of the first model may include at least one of the following: the loss function, the accuracy rate, the accuracy level, the recall rate, the precision rate.

In some embodiments of the present disclosure, the first communication unit 31, before transmitting the first information to the second network analytics function, may further be configured to perform the query to the network repository function based on the second information, so as to obtain the address of the second network analytics function.

In some embodiments of the present disclosure, the first model information, which is transmitted by one of the at least one second network analytics function, may further include the label data.

In some embodiments of the present disclosure, the second network analytics function may include one sub-model of the first model; and/or, all sub-models of all second network analytics functions may collectively form the first model.

In the embodiments of the present disclosure, in practice, the first processing unit 32 in the apparatus may be configured as a central processing unit (CPU), a digital signal processor (DSP), a microcontroller unit (MCU), or a field-programmable gate array (FPGA). In practice, the first communication unit 31 in the apparatus may be configured as a communication module (including: a basic communication suite, an operating system, a communication module, a standardized interface and a protocol, and so on) and a transceiver antenna.

The present disclosure provides a model training apparatus, configured in the second network analytics function. The second network analytics function may be configured in the UE, the RAN, the NF, or the AF. FIG. 5 is a structural schematic diagram II of the model training apparatus according to an embodiment of the present disclosure. As shown in FIG. 5, the apparatus may include a second processing unit 41 and a second communication unit 42.

The second processing unit 41 may be configured to perform computation or processing based on the local model to obtain the first model information.

The second communication unit 42 may be configured to: transmit the first model information to the first network analytics function; and receive the second model information transmitted from the first network analytics function.

The second processing unit 41 may further be configured to update the local model based on the second model information.

In some embodiments of the present disclosure, the first model information may include the intermediate information, which may be obtained by the second network analytics function performing computation or processing based on the local model.

In some embodiments of the present disclosure, the second model information may include the sub-model information, corresponding to the second network function, of the first model.

In some embodiments of the present disclosure, the second communication unit 42 may further be configured to collect data from at least one of: the terminal, the radio access network, the network function, and the application function.

The second processing unit 41 may further be configured to perform data alignment for all second network analytics functions based on the collected data and to determine the first data, which belongs to the same user and exists in each second network analytics function.

In some embodiments of the present disclosure, the second processing unit 41 may be configured to perform, based on the first data and the local model, computation or processing to obtain the first model information.

In some embodiments of the present disclosure, the first model information may further include the label data.

In some embodiments of the present disclosure, the second communication unit 42, before the second processing unit 41 performing computation or processing based on the sub-model of the first model, may further be configured to receive the first information transmitted by the first network analytics function. The first information may be configured to request training of the model.

In some embodiments of the present disclosure, the second communication unit 42 may further be configured to transmit the fifth information to the network repository function. The fifth information may be used for registration. The fifth information may include at least one of the following information of the second network analytics function: the address, the service area, the federated learning capability type.

In some embodiments of the present disclosure, the second network analytics function may be embedded within the UE, the RAN, the NF, or the AF; or may be configured independently from the UE, the RAN, the NF, or the AF.

In the embodiments of the present disclosure, in practice, the second processing unit 41 in the apparatus may be configured as a CPU, a DSP, an MCU, or an FPGA. In practice, the second communication unit 42 in the apparatus may be configured as a communication module (including: a basic communication suite, an operating system, a communication module, a standardized interface and a protocol, and so on) and a transceiver antenna.

It should be noted that the model training apparatus performing model training provided in the above embodiments may be illustrated based on configuration of the aforementioned program modules. In practice, processing tasks described above may be distributed to different program modules as needed. That is, an internal structure of the apparatus may be configured as different program modules to perform all or part of the processing described above. In addition, embodiments of the model training apparatus and embodiments of the model training method provided herein share one same concept. Specific implementation processes of the model training apparatus may be referred to the method embodiments and will not be repeated here.

The present disclosure further provides a network function, and the network function may specifically be the first network analytics function or the second network analytics function. FIG. 6 is a structural schematic diagram of hardware of the network function according to an embodiment of the present disclosure. As shown in FIG. 6, the network function may include a memory 52, a processor 51, and a computer program stored on the memory 52 and executable on the processor 51. When executing the computer program, the processor 51 may perform the operations of the model training method applied to the first network analytics function or the second network analytics function.

In some embodiments, the network function may further include at least one network interface 53. Various components within the network function may be coupled to each other via a bus system 54. It is understood that the bus system 54 may facilitate communication among the various components. In addition to a data bus, the bus system 54 may further include a power bus, a control bus, and a status signal bus. However, for clarity of illustration, all buses are labeled as the bus system 54 in FIG. 6.

It is understood that the memory 52 may be a volatile memory or a non-volatile memory, or may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface storage, an optical disc, or a compact disc read-only memory (CD-ROM). The magnetic surface storage may be a disc storage or a tape storage. The volatile memory may be a random access memory (RAM), which serves as external cache. By way of example but not limitation, various forms of RAM may be configured, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory 52 in the embodiments of the present disclosure may include, but not limited to, the above and any other suitable types of memories.

The methods disclosed in the embodiments of the present disclosure may be applied in the processor 51 or performed by the processor 51. The processor 51 may be an integrated circuit chip having signal processing capabilities. During implementation, operations of the above methods may be performed through integrated logic circuits within the processor 51 or through instructions in a software form. The processor 51 may be a general-purpose processor, a DSP, or other programmable logic devices, a discrete gate or a transistor logic device, a discrete hardware component, and so on. The processor 51 may implement or execute the methods, operations, and logic flow charts disclosed in the embodiments of the present disclosure. The general-purpose processor may be a microprocessor or any conventional processor. The operations of the method disclosed in the embodiments of the present disclosure may be directly embodied as being executed by a hardware decoding processor, or executed by a combination of hardware and software modules within a decoding processor. The software module may reside in a storage medium located within the memory 52. The processor 51 may read information from the memory 52 and combine the information with its hardware to complete the operations in the above methods.

In some embodiments, the network functions may be configured as one or more application-specific integrated circuits (ASICs), digital signal processors (DSPs), programmable logic devices (PLDs), complex programmable logic devices (CPLDs), field-programmable gate arrays (FPGAs), general-purpose processors, controllers, microcontrollers (MCUs), microprocessors, or other electronic components, so as to perform the aforementioned methods.

In some embodiments, the present disclosure further provides a computer-readable storage medium, such as a memory 52 containing a computer program. The computer program may be executable by the processor 51 of the network function to perform the operations described in the aforementioned methods. The computer-readable storage medium may be the memory such as the FRAM, the ROM, the PROM, the EPROM, the EEPROM, the flash memory, the magnetic surface memory, the optical disc, or the CD-ROM; or may be a device including any one or combination of the aforementioned memories.

The computer-readable storage medium provided in the embodiments of the present disclosure may store a computer program. When the computer program being executed by the processor, the operations of the model training method applied to the first network analytics function or the second network analytics function in the embodiments of the present disclosure may be achieved.

The methods disclosed in various method embodiments provided herein may be arbitrarily combined, without conflict, to yield any new method embodiment.

Features disclosed in various apparatus embodiments provided herein may be arbitrarily combined, without conflict, to yield any new apparatus embodiment.

Features disclosed in the various method or apparatus embodiments provided herein may be arbitrarily combined, without conflict, to yield any new method embodiment or new apparatus device embodiment.

In the various embodiments provided herein, it should be understood that the disclosed apparatus and method may be implemented in other ways. The apparatus embodiments described above are merely illustrative. For example, division of units may be performed based on merely logical functions. In practice, alternative division may be performed. For example, multiple units or components may be combined or integrated into another system; or certain features may be omitted or not executed. Furthermore, coupling, direct coupling, or communicative connection between various components of the above embodiments may be achieved through interfaces, devices, or units. Indirect coupling or communicative connections may be electrical, mechanical, or in other forms.

The units described as separate components may or may not be physically separated from each other. Components displayed as units may or may not form physical units, and that is, the components may reside at one location or be distributed across multiple network units. Depending on practical requirements, some or all of these units may be arranged to achieve the objectives of the present embodiment.

In addition, in the embodiments of the present disclosure, all functional units may be integrated into one single processing unit, or each unit may be implemented as an independent unit, or two or more units may be integrated into one unit. The integrated unit may be implemented in a hardware form or in a combination of hardware and software functional units.

Any ordinary skilled artisan shall understand that all or part of the operations of the method embodiments described above may be performed by hardware associated with program instructions. The aforementioned program may be stored on the computer-readable storage medium. When the program is executed, the program performs the operations described in the method embodiments. The aforementioned storage medium may include various media capable of storing program codes, such as a removable storage device, the ROM, the RAM, the magnetic disc, or the optical disc.

Alternatively, the integrated unit described herein, when being sold or used as an independent product, may be implemented as a software functional module and stored on a computer-readable storage medium. According to the above understanding, technical solutions of the embodiments disclosed herein, or portions that constitute contributions to the related art, may be embodied as software products. These computer software products may be stored on a storage medium and include a set of instructions for causing a computer device (which may be a personal computer, a server, or a network device, and so on) to execute all or part of the methods described in the various embodiments of the present disclosure. The aforementioned storage medium may include various media capable of storing program codes, such as the removable storage device, the ROM, the RAM, the magnetic disc, or the optical disc.

The above description provides only specific embodiments of the present disclosure. However, the scope of the present disclosure is not limited thereto. Any variation or substitution readily conceivable by any ordinary skilled artisan within the scope of the technology of the present disclosure shall be encompassed within the scope of the present disclosure. Therefore, the scope of the present disclosure shall be determined by the scope of the appended claims.

**Claims**

1. A model training method, comprising:

   a first network analytics function receiving first model information transmitted from a second network analytics function;
   performing computation, aggregation, or processing based on the first model information to obtain second model information;
   transmitting the second model information to the second network analytics function, wherein the second model information is used by the second network analytics function to update a local model;
   wherein, the second network analytics function is configured in at least one of: a user equipment (UE), a radio access network (RAN), a network function (NF), or an application function (AF).

2. The model training method according to claim 1, wherein, the first model information comprises intermediate information, which is obtained by the second network analytics function performing computation or processing based on the local model.

3. The model training method according to claim 1, wherein, the second model information comprises sub-model information, corresponding to the second network function, of the first model.

4. The model training method according to claim 1, wherein, before the first network analytics function receiving the first model information transmitted from the second network analytics function, the method further comprises:
   the first network analytics function transmitting first information to the second network analytics function, wherein the first information is used to request model training.

5. The model training method according to claim 4, wherein, before the first network analytics function transmitting the first information to the second network analytics function, the method further comprises:
   the first network analytics function receiving second information transmitted by a consumer, wherein the second information is configured to request or subscribe to a model or model information.

6. The model training method according to claim 1, further comprising:

   the first network analytics function performing computation, aggregation, or processing based on the first model information to obtain a performance metric of a first model; and
   the first network analytics function transmitting third information to a consumer, wherein the third information comprises the performance metric of the first model; and the third information is used by the consumer to make decision on whether to continue training or terminate training.

7. The model training method according to claim 6, further comprising:
   the first network analytics function receiving fourth information transmitted by the consumer, wherein the fourth information is configured to indicate whether to continue training or terminate training.

8. The model training method according to claim 6, wherein, the performance metric of the first model comprises at least one of: a loss function, an accuracy rate, an accuracy level, a recall rate, and a precision rate.

9. The model training method according to claim 5, wherein, before the first network analytics function transmitting the first information to the second network analytics function, the method further comprises:
   the first network analytics function performing, based on second information, query to a network repository function to obtain an address of the second network analytics function.

10. The model training method according to claim 1, wherein, the first model information transmitted from one second network analytics function further comprises label data.

**11.** The model training method according to claim 1 or 2, wherein,

the second network analytics function has one sub-model of the first model; and/or,
all sub-models of all second network analytics functions collectively form the first model.

**12.** A model training method, comprising:

a second network analytics function performing computation or processing based on a local model to obtain first model information and transmitting the first model information to a first network analytics function;
receiving second model information transmitted by the first network analytics function and updating the local model based on the second model information;
wherein, the second network analytics function is configured in a user equipment (UE), a radio access network (RAN), a network function (NF), or an application function (AF).

**13.** The model training method according to claim 12, wherein,
the first model information comprises intermediate information, which is obtained by the second network analytics function performing computation or processing based on the local model.

**14.** The model training method according to claim 12, wherein, the second model information comprises sub-model information, corresponding to the second network function, of the first model.

**15.** The model training method according to claim 12, wherein, before the second network analytics function performing computation or processing based on the local model, the method further comprises:

the second network analytics function collecting data from at least one of: a terminal, the radio access network, the network function, and the application function; and
performing, based on the collected data, data alignment with any other second network analytics function to determine first data, which belongs to a same user and exists in each second network analytics function.

**16.** The model training method according to claim 15, wherein, the second network analytics function performing computation or processing based on second local model to obtain the first model information, comprises:
the second network analytics function performing computation or processing based on the first data and the local model to obtain the first model information.

**17.** The model training method according to claim 12, wherein, the first model information further comprises label data.

**18.** The model training method according to claim 12, wherein, before the second network analytics function performing computation or processing based on the local model, the method further comprises:
the second network analytics function receiving first information transmitted by the first network analytics function, wherein the first information is configured to request model training.

**19.** The model training method according to claim 12, further comprising:
the second network analytics function transmitting fifth information to a network repository function, wherein the fifth information is used for registration; the fifth information comprises at least one of the following information of the second network analytics function: an address, a service area, a federated learning capability type.

**20.** The model training method according to claim 12, wherein, the second network analytics function is embedded within the UE, the RAN, the NF, or the AF; or is deployed independently from the UE, the RAN, the NF, or the AF.

**21.** A model training apparatus, configured in a first network analytics function, the model training apparatus comprising a first communication unit and a first processing unit; wherein:

the first communication unit is configured to receive first model information transmitted by the second network analytics function;
the first processing unit is configured to perform computation, aggregation, or processing based on the first model information to obtain second model information; and
the first communication unit is further configured to transmit the second model information to the second network analytics function, wherein the second model information is used by the second network analytics function to update a local model;

wherein, the second network analytics function is respectively configured in at least one of: a user equipment (UE), a radio access network (RAN), a network function (NF), and an application function (AF).

22. A model training apparatus, configured in a second network analytics function, wherein, the second network analytics function is configured in a user equipment (UE), a radio access network (RAN), a network function (NF), or an application function (AF); and the model training apparatus comprises a second processing unit and a second communication unit; wherein:

the second processing unit is configured to perform computation or processing based on a local model to obtain first model information;

the second communication unit is configured to: transmit the first model information to a first network analytics function; and receive second model information transmitted from the first network analytics function; and

the second processing unit is further configured to update the local model based on the second model information.

23. A computer-readable storage medium, storing a computer program, wherein,

when the computer program is executed by a processor, operations of the model training method according to any one of claims 1 to 11 is performed; or

when the computer program is executed by a processor, operations of the model training method according to any one of claims 12 to 20 is performed.

24. A network function comprising a memory, a processor, and a computer program stored on the memory and executable on the processor, wherein,

the processor, when executing the computer program, is configured to perform operations of the model training method according to any one of claims 1 to 11; or

the processor, when executing the computer program, is configured to perform operations of the model training method according to any one of claims 12 to 20.

A first network analysis function may receive first model information that is transmitted from at least one second network analysis function

101

Computation, aggregations, or processing may be performed based on the first model information to obtain second model information

102

The second model information may be transmitted to the second network analysis function, and the second model information may be used by the second network analysis function to update a local model

103

FIG. 1

NRF

searching

1ˢᵗ network analysis function

register

Iterated training

| 2nd network analysis function | 2nd network analysis function | 2nd network analysis function | 2nd network analysis function |
|---|---|---|---|
| UE | RAN | NF | AF |

FIG. 2

The second network analysis function may perform computation or processing based on the local model to obtain the first model information and may transmit the first model information to the first network analysis function

201

The second model information transmitted by the first network analysis function may be received, and the local model may be updated based on the second model information

202

FIG. 3

1st communication
unit
31

1st processing unit
32

FIG. 4

2nd processing unit
41

2nd communication
unit
42

FIG. 5

Network function

52

processor 51

54

Memory

Network
interface 53

FIG. 6

## INTERNATIONAL SEARCH REPORT

| International application No. |
|---|
| **PCT/CN2024/111074** |

**A. CLASSIFICATION OF SUBJECT MATTER**

H04L 41/14(2022.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, WPABS, ENTXT, DWPI, VEN, CNABS, 3GPP: 模型训练, 网络分析功能, 模型信息, 计算, 聚合, 处理, 更新, 网络功能, NF, 应用功能, AF, Model Training, Network Analysis Function, Model Information, Computing, Aggregation, Processing, Updating, Network Function, Application Function

**C. DOCUMENTS CONSIDERED TO BE RELEVANT**

| Category* | Citation of document, with indication, where appropriate, of the relevant passages | Relevant to claim No. |
|---|---|---|
| X | CN 113723434 A (CHINA MOBILE COMMUNICATION LTD., RESEARCH INSTITUTE et al.) 30 November 2021 (2021-11-30)<br>description, paragraph [0050]-paragraph [0167], figures 1-10, and claims 1-28 | 1-24 |
| A | CN 115052305 A (DATANG MOBILE COMMUNICATIONS EQUIPMENT CO., LTD.) 13 September 2022 (2022-09-13)<br>entire document | 1-24 |
| A | CN 115150287 A (HUAWEI TECHNOLOGIES CO., LTD.) 04 October 2022 (2022-10-04)<br>entire document | 1-24 |
| A | CN 116432018 A (VIVO COMMUNICATION TECHNOLOGY CO., LTD.) 14 July 2023 (2023-07-14)<br>entire document | 1-24 |
| A | CN 116562363 A (CHINA MOBILE COMMUNICATION LTD., RESEARCH INSTITUTE et al.) 08 August 2023 (2023-08-08)<br>entire document | 1-24 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 October 2024** | **21 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/111074**

| C. | DOCUMENTS CONSIDERED TO BE RELEVANT | | |
|---|---|---|
| Category* | Citation of document, with indication, where appropriate, of the relevant passages | Relevant to claim No. |
| A | WO 2023099970 A1 (TELEFONAKTIEBOLAGET LM ERICSSON (PUBL)) 08 June 2023 (2023-06-08)<br>  entire document | 1-24 |

Form PCT/ISA/210 (second sheet) (July 2022)

**INTERNATIONAL SEARCH REPORT**
**Information on patent family members**

International application No.

**PCT/CN2024/111074**

| Patent document cited in search report | | | Publication date (day/month/year) | Patent family member(s) | | | Publication date (day/month/year) |
|---|---|---|---|---|---|---|---|
| CN | 113723434 | A | 30 November 2021 | None | | | |
| CN | 115052305 | A | 13 September 2022 | WO | 2022188671 | A1 | 15 September 2022 |
| | | | | EP | 4307756 | A1 | 17 January 2024 |
| | | | | US | 2024155391 | A1 | 09 May 2024 |
| CN | 115150287 | A | 04 October 2022 | WO | 2022206358 | A1 | 06 October 2022 |
| | | | | EP | 4304142 | A1 | 10 January 2024 |
| | | | | US | 2024022470 | A1 | 18 January 2024 |
| CN | 116432018 | A | 14 July 2023 | WO | 2023125760 | A1 | 06 July 2023 |
| CN | 116562363 | A | 08 August 2023 | None | | | |
| WO | 2023099970 | A1 | 08 June 2023 | KR | 20240115874 | A | 26 July 2024 |
| | | | | MX | 2024006617 | A | 19 June 2024 |
| | | | | CN | 118303011 | A | 05 July 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311062350